# EUROPEAN PATENT SPECIFICATION

(11) **EP 0 408 202 B1**
(45) Date of publication and mention of the grant of the patent: **25.10.1995**
(21) Application number: 90306643.9
(22) Date of filing: 19.06.1990
(51) Int. Cl.: B29C 41/20, B29C 41/42, B29C 41/46, B29C 44/00, B60R 13/02, B60J 5/04, B29L 31/46

(54) **Method and apparatus for forming a 360 degree skin handle**
Verfahren und Vorrichtung zur Herstellung einer 360-Grad-Hauthandgriffes
Procédé et dispositif pour le formage d'une poignée de 360 degrés en peau

(30) Priority: 10.07.1989 US 377254
(43) Date of publication of application: 16.01.1991
(73) Proprietor: DAVIDSON TEXTRON INC., Dover New Hampshire 03820 (US)
(72) Inventor: Kargarzadeh, Reza, Riceville, Tennessee 37370 (US); Tuttle, Ken D., S. Berwick, Maine 03908 (US); Grimes, John A., Dover, New Hampshire 03820 (US)
(74) Representative: Burrows, Anthony Gregory

(56) References cited:
- EP-A- 0 187 990
- GB-A- 2 170 140
- US-A- 4 949 508

## Description

This invention relates to methods and apparatus for forming products from thermoplastic material by the steps of casting the material against a heated mold surface and fusing the material thereon to form a skin or shell from the material according to the preambles of the independent claims. More particularly the invention relates to such methods and apparatus wherein the skin or shell is shaped to form handle segments as part of the skin or shell.

US-A-4,459,331 discloses a product in which an outer skin is formed with an integral loop portion that forms part of a handle on the product. While suitable for its intended purpose it does not have a full 360 degree skin cover at the handle portion. Rather, the handle is made up of a partial loop portion and a rigid injection molded piece which combine to form the hand grip surface of the handle.

Other padded handle assemblies are shown in US-A-3,123,403 which discloses an armrest with a soft cellular foam core. US-A-4,021,072 teaches an inner door pull with a soft molding which encases a metal strip. In each case the door handle is formed as a separate element which must be fastened to a door panel or other like interior trim product.

It is also generally known to form skins or shells from powdered, liquid or paste types of thermoplastic material by directing the thermoplastic material directly onto the heated mold for fusing and curing a thin layer of material on the mold to form the shell or skin product. Examples of such prior art casting methods are set forth in US-A-4,562,025; 4,610,620; and 4,623,503.

It is also generally known to make up composite panels having a rigid structural insert by locating a thin skin or shell of thermoplastic material into a mold cavity part; locating the rigid structural insert in spaced relationship with the skin or shell and then filling a space between the shell and insert with foam precursors that react to form a soft cellular foam core between the shell and the insert. An example of such a method is set forth in US-A-4,572,856.

Nearest prior art document EP-A-0187990 discloses a panel unit, especially for a vehicle interior, for example a door panel incorporating a handle. A main decorative covering for the main part of the panel is made in one piece with a tubular decorative covering for the handle, as a pre-formed plastics skin. The tubular decorative covering at one end is in one piece with the main decorative covering and at its other end is arranged to be inserted into an aperture provided through the main decorative covering. The free end of the tubular decorative covering may have a stepped tip, the cross-section of which is tapered and matched to the dimensions of the aperture in the main decorative covering. The vertical shoulder of the tubular covering is in close contact with the main covering. A rosette is fixed between the shoulder of the tubular covering and the main covering, with a hole to admit the stepped tip of the tubular covering. An outwardly directed annular flange at the edge of the aperture through the main covering may be provided to permit overcoming of problems of escape of foam when a foam plastics filling is formed behind the decorative coverings. The ends of the filling core in the tubular covering merge immediately into the filling layer behind the main covering, so that a close foam bond is provided between the core and the layer, particularly at the parting at the non-integral end of the tubular covering. At least the core has a reinforcement embedded in its foam plastics. The reinforcement may have one end penetrating the aperture through the main covering and a pressing area which grips the inside of the shoulder of the tubular covering.

In the manufacture of the panel unit of EP-A-0187990, first the plastics skin is formed to provide the main decorative covering and the tubular decorative covering, the reinforcement is inserted in at least the parting zone, then the skin and the reinforcement, and any rosette required, are laid in a foam mold, and the tubular covering filled with the foam core and the foam layer applied behind the main covering. When the skin is laid in the foam mold care should be taken to ensure a reliable seal in the parting zone. To create close contact between the main covering and the shoulder of the tubular covering, the pressing area of the reinforcement is applied to the inside of the shoulder, to pull the shoulder against the main covering before the application of foam commences.

According to a first aspect of the present invention, there is provided a panel comprising a main part and a handle bridging between first and second portions of said main part, there being an interior reinforcement member of the handle, a layer of flexible foam surrounding the reinforcement member, and a skin of fused and cured thermoplastic material covering both the main part and the handle, said skin comprising first and second skin segments at the respective ends of said handle and formed integrally of said first and second portions and a skin tube segment formed without interruption 360 degrees around the axis of the reinforcement member through substantially the full length of the handle, said skin tube segment being formed continuously with the first skin segment at one end of said handle, characterized in that said skin tube segment is formed continuously with both of said skin segments.

According to a second aspect of the present invention, there is provided a method for forming an integral handle in a panel constituting a composite plastic structure, comprising preforming a skin of fused and cured thermoplastic material to have integral first and second skin segments and an integral skin tube segment therein whereof the skin tube segment is formed continuously with the first skin segment, and locating a reinforcement member therethrough prior to directing foam precursors into a space formed between the skin and the reinforcement member in a forming mold and reacting the precursors to form a soft foam backing behind the skin, thereby to form a handle bridging between first and second portions of a main part of said panel, with said skin tube segment constituting a covering of the handle and said first and second skin segments constituting coverings of said first and second portions, characterized by preforming said skin so that the skin tube segment is formed continuously with both of said skin segments.

According to a third aspect of the present invention, there is provided a method for forming a shell of fused and cured thermoplastic material by casting the thermoplastic material against a heated mold to form a thin build-up of material on the heated mold, characterized by:
forming a tubular 360 degree surface on the heated mold through a segment of the casting surface thereof and heating all of the 360 degree surface while the thermoplastic material is cast thereon so as to form a shell having a first generally planar segment and a second tubular segment having opposite ends thereof formed in-situ with the planar segment.

According to a fourth aspect of the present invention, there is provided apparatus for molding a shell of thermoplastic material having an integral tube segment thereof, including a heated mold with a recess therein, characterized by:
means forming a partially closed curved surface in a casting surface of the mold for receiving thermoplastic material during a casting cycle;
plug means for closing the opening in said partially closed curved surface, said plug means having an inboard surface thereon extending said partially closed curved surface to form a full 360 degree tube surface for receiving thermoplastic material, fusing the thermoplastic material and curing the thermoplastic material; and
heater means in said plug means for directing heat into part of the full 360 degree tube surface.

Owing to the present invention, it is possible to avoid problems of sealing against foam escape at one or both of the ends of the tubular segment, to reduce risk of separation of the tubular segment from the main part of the skin during subsequent use of the panel, and to improve the appearance of the finished product.

In particular, it is possible to provide an improved one-piece integral handle assembly wherein the outer surface of the handle is formed from a tubular skin segment formed integrally with a cover skin for a foamed-in-place composite panel product.

Advantageously, the 360 degree surface is heated by directing part of the heat energy through the mold per se and directing part of the heat energy through a heater formed separately from the mold. The mold may have a partial tube surface formed therein, and a plug be located in the mold to complete a full 360 degree tube surface and part of the heat be applied to the tube segment through the mold and part of the heat to the tube segment through the plug. The heat source may be in part provided by locating a movable heater on the mold and selectively moving the heater into either a first position on the mold to form a heated tube surface onto which thermoplastic material can be cast to form a full 360 degree tube skin segment for a handle grip or a second position raised from the mold to form a demolding path to remove the tube skin segment from the mold along with a shell formed integrally of the tube skin segment.

Lift means may be secured to the mold for moving the plug into either a closure position in which the partially closed curved surface is closed to define the full 360 degree curvilinear surface prior to casting thermoplastic material thereagainst or into a demolding position wherein the partial surface is opened to demold a formed tube skin segment following the casting process.

In order that the invention may be clearly understood and readily carried into effect, reference will now be made, by way of example, to the accompanying drawings, wherein:
Figure 1 is a perspective view of a vehicle door panel having an integral door handle;
Figure 2 is an enlarged longitudinal sectional view taken along line 2-2 of Figure 1 looking in the direction of the arrows;

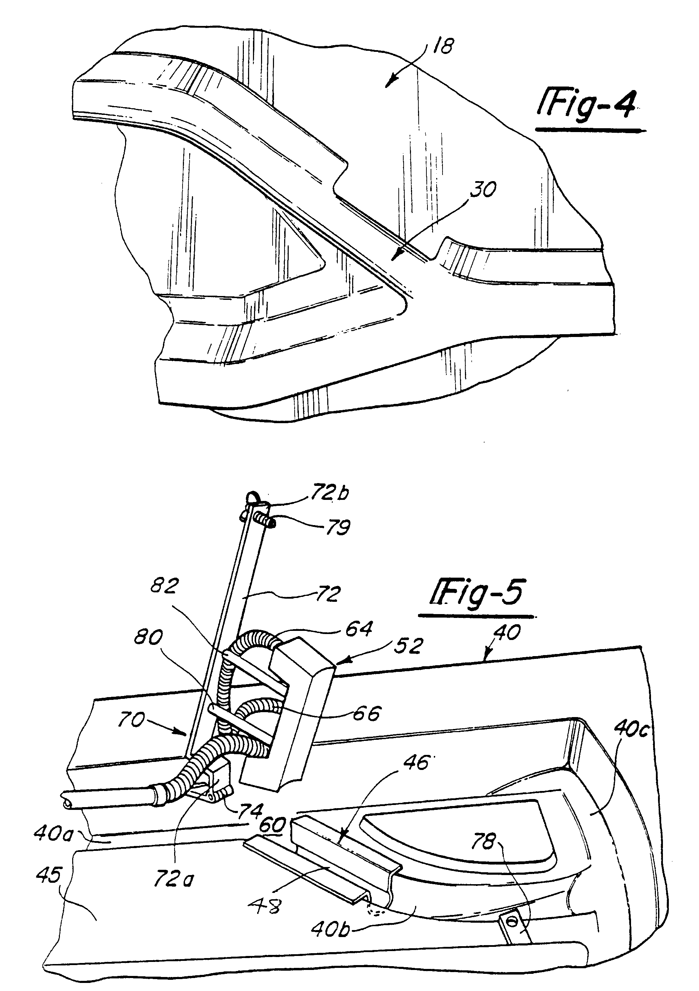

Figure 3 is an enlarged cross-sectional view taken along line 3-3 of Figure 2 looking in the direction of the arrows;
Figure 4 is a fragmentary perspective view of a plastic shell formed by the present method;
Figure 5 is a perspective view of apparatus used to form the shell of Figure 4;
Figure 6 is a view like Figure 5, but showing the apparatus in a casting position;
Figure 7 is a sectional view taken along the line 7-7 of Figure 6 looking in the direction of the arrows; and
Figure 8 is a perspective view of another step in the method.

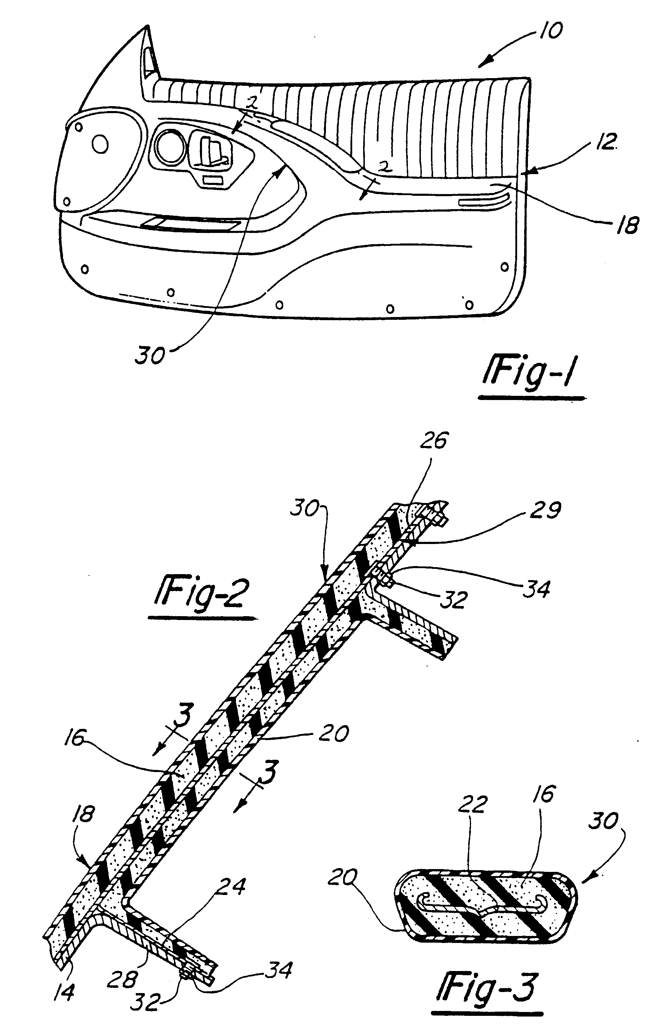

Figure 1 shows a vehicle door assembly 10 having a composite panel 12 made up of a reinforcing insert 14, a cellular foam core 16 best seen in Figure 2, and a unitary single-piece skin or shell 18 forming the interior surface of the door assembly 10. The shell 18 is preferably formed from a thermoplastic material such as vinyl plastisol, vinyl powder, vinyl acrylonitrile-butadiene-styrene and other well known plastics forming the outer decorative layer of products.

The shell 18 has a door handle tube skin segment 20 in the shape of a tube formed integrally with the panel 12 as part of the shell 18. More particularly, the door handle tube skin segment 20 is formed completely around a reinforcement strip 22. The strip 22 is located centrally of the tube skin segment 20 and it extends axially of the tube skin segment 20 for reinforcing it throughout its length.

The reinforcement strip 22 has opposite ends 24, 26 thereon connected to spaced wall segments 28, 29 of the insert 14 by suitable fasteners, representatively shown as screws 32 held down by nuts 34.

The foam core 16 is formed in situ of the composite panel 12 and completely surrounds the reinforcement strip 22 end to end thereof and fills the door handle tube skin segment 20. The foam core 16 thereby serves to define a soft backing for a 360 degree soft feel, integral handle 30 on the composite panel 12.

Referring now to Figures 5-7, the shell 18 is made by use of a shell mold 40 with a plurality of depressions 40a-40c therein which are configured to match the outer contour of the shell 18 on the door assembly 10.

The shell mold 40 is associated with a suitable heating and cooling source which is arranged to direct heating or cooling medium against the inboard surface 44 of the shell mold 40. The shell mold 40 has an exposed casting surface 45 defined in part by depressions 40a-40c against which thermoplastic material is deposited during a molding process to be described.

One of the depressions 40b receives a mold insert 46 which has an inner surface 48 thereon forming part of a 360 degree tube surface 50. The remainder of the 360 degree tube surface 50 is formed in part by a heater assembly 52. The heater assembly includes a plug 54 having an inboard surface 55 completing the 360 degree tube surface 50. The plug 54 has spaced side surfaces 56, 58 thereon located in sealed engagement with spaced inlet surfaces 57, 59 on the insert 46. The inlet surfaces 57, 59 define an insert opening 60 through which the plug 54 is inserted during a casting sequence and from which the plug 54 is removed to allow part demolding.

The plug 54 is machined from a suitable heat conductive metal with a thermal coefficient of expansion like that of the shell mold 40. An electrical resistance heater 62 is directed through a plug bore 63. The heater 62 is electrically connected to electrical leads 64, 66 for supplying electrical power to heater 62 during a fusion and cure cycle to be described. A cooling tube 68 is secured to the plug 54 and is connected to pipes 68a and 68b for supplying cooling medium from a suitable coolant source 69.

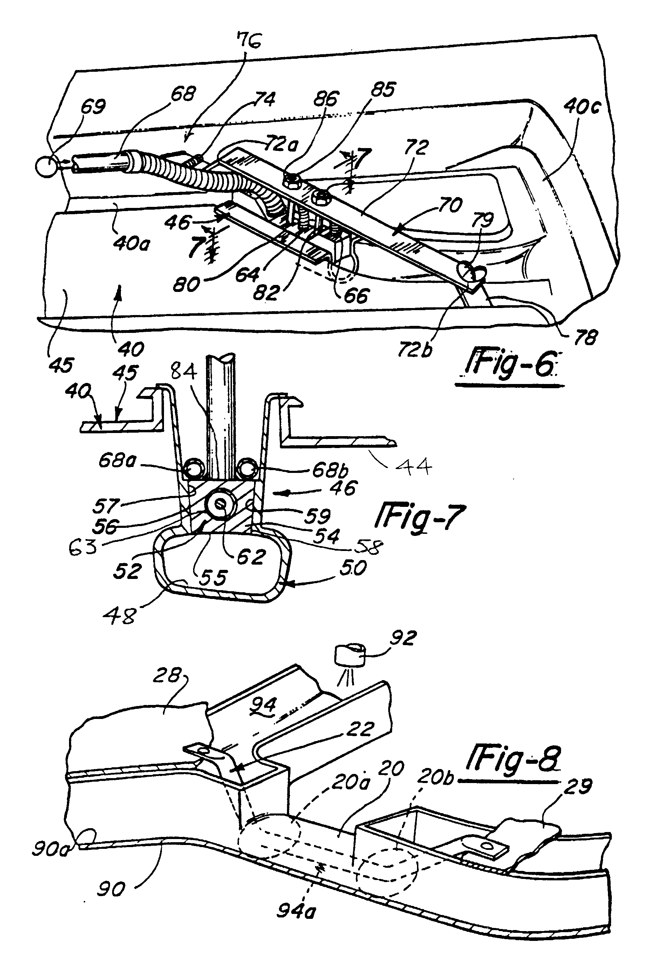

The electrical leads 64, 66 and pipes 68a, 68b are flexible and have a length which will enable the plug 54 to be moved from a demolding position shown in Figure 5 to the molding position of Figure 6. A lift bracket assembly 70 provides for movement of the plug 54 between the molding and demold positions.

More particularly the lift bracket assembly 70 includes an arm 72 with an inwardly bent end 72a connected to a hinge 74 secured to a waste surface region 76 of the shell mold 40. The opposite end 72b of the arm 72 is connected to a side bracket 78 on the shell mold 40 where it is secured in place by a screw 79 to a tapped hole in the bracket 78.

The plug 54 is secured to the arm 72 for swinging movement therewith by a pair of spaced posts 80, 82 each welded at one end to the outboard surface 84 of the plug 54 and each having a threaded end 85 thereon directed through the arm 72 to be held thereagainst by nuts 86.

The present method utilizes the shell mold 40 and heater assembly 52 as described above in the first stage of forming the integral handle 30. The method includes the steps of directing heat from one source 42, e.g. a gas heater, against the inboard surface 44 of the shell mold 40 to provide part of the heat to the surface 50. Other heat is directed from a second source, e.g., the electrical resistance heater assembly 52, to heat the remainder of the surface 50. The heat from the first and second sources is applied during a molding sequence in which a suitable charge of thermoplastic material is directed onto an exposed casting surface 45 on the shell mold 40 and through the tube section having the surface 50 formed on the interior thereof.

The thermoplastic material can be a resin material with a suitable plasticizer and pigmentation in either a slurry form or in a dry powder or paste form. One suitable material for the dry powder is polyvinyl chloride. The preferred embodiment uses a charge of dry powder particles which is deposited on the heated casting surface 45 which is moved, e.g., rotated or oscillated, such that part of the material flows across surface 50. A part of the charge is adhered to the heated surfaces 45 of the shell mold and to the inboard surface 55 of the heater assembly 52. The particles of powder fuse together to form a layer of material that forms the shell 18. Following fusion, the layer of material is cured and then the shell mold 40 and plug 54 are cooled prior to demolding. The heater assembly 52 is pivoted away from the shell mold 40 to enable the shell 18 and the integral full 360 degree tube skin segment 20 to be demolded through the insert opening 60.

Subsequently, the shell 18 and the integral tube skin segment 20 are combined into a composite structure having an integral handle 30 with a full 360 degree soft surface at the hand grip of the handle. The method includes placing the shell 18 onto a cavity, pour mold 90, the bottom surface 90a thereof being shown in Figure 8. The skin handle tube segment 20 has openings 20a, 20b at opposite ends. First the reinforcement strip 22 is snaked through the tube skin segment 20. Then the insert member 14 is located in the mold 90 and fastened to the reinforcement strip 22. At this point the mold 90 is open and foam precursors are directed through a supply nozzle 92 into a molding space 94 formed between the shell 18 and the reinforcing insert 14. The mold lid (not shown) is closed and the foam precursors are reacted to fill the space 94 with soft, flexible cellular foam which is bonded to the insert 14 on one side and to the shell 18 on the other side. The foam precursors have a suitable viscosity which allows them to fill the handle space 94a which is formed between the tube segment 20 and the reinforcement strip 22. Owing to formation of the cellular foam core 16, the bonded insert 14, core 16 and shell 18 combine to form the composite panel 12. The panel 12 is removed from the mold, the surfaces of which are presprayed with suitable mold release agents. The panel 12 is then attached to frame elements (not shown) to form the door assembly 10.

While an embodiment of the invention has been described in an illustrative manner with reference to an integral handle on a vehicle door interior panel of composite form, the invention is equally applicable to other products including hand grips for various forms of vehicle interior products, hand grips on luggage and on other products having a plastic outer shell or skin. It is therefore to be understood that the invention may be practiced otherwise than as specifically described herein and yet remain within the scope of the appended claims.

## Claims

1. A panel (12) comprising a main part and a handle (30) bridging between first and second portions of said main part, there being an interior reinforcement member (22) of the handle (30), a layer (16) of flexible foam surrounding the reinforcement member (22), and a skin (18) of fused and cured thermoplastic material covering both the main part and the handle (30), said skin (18) comprising first and second skin segments at the respective ends of said handle and formed integrally of said first and second portions and a skin tube segment (20) formed without interruption 360 degree around the axis of the reinforcement member (22) through substantially the full length of the handle (30), said skin tube segment (20) being formed continuously with the first skin segment at one end of said handle (30), characterized in that said skin tube segment (20) is formed continuously with both of said skin segments.

2. A panel according to claim 1, and further including an insert (14) of rigid material, said layer (16) of flexible foam being bonded in situ on said insert (14) and said skin (18) of fused and cured thermoplastic material being bonded to the layer (16) to cover the outer surface thereof.

3. A panel according to claim 2, wherein the insert (14) of rigid material has spaced wall portions (28,29) thereof and said reinforcement member (22) bridges said spaced wall portions (28,29), there being means (32,34) for fixedly securing opposite ends of said reinforcement member (22) to said spaced wall portions (28,29) for supporting the skin tube segment (20) with respect to said insert (14).

4. A method for forming an integral handle (30) in a panel (12) constituting a composite plastic structure (12), comprising preforming a skin (18) of fused and cured thermoplastic material to have integral first and second skin segments and an integral skin tube segment (20) therein whereof the skin tube segment (20) is formed continuously with the first skin segment, and locating a reinforcement member (22) therethrough prior to directing foam precursors into a space formed between the skin (18) and the reinforcement member (22) in a forming mold (90) and reacting the precursors to form a soft foam backing (16) behind the skin (18), thereby to form a handle (30) bridging between first and second portions of a main part of said panel (12), with said skin tube segment (20) constituting a covering of the handle (30) and said first and second skin segments constituting coverings of said first and second portions, characterized by preforming said skin (18) so that the skin tube segment (20) is formed continuously with both of said skin segments.

5. A method according to claim 4, characterized in that the skin (18) is located in a mold cavity of said mold (90) and is smoothed against the mold cavity surface, said reinforcement member (22) is inserted through the skin tube segment (20), and thereafter the foam precursors are directed between the skin (18) and the reinforcement member (22) to cause foam material to flow into surrounding relationship with the reinforcement member (22) to form a full 360 degree cushion within the skin tube segment (20).

6. A method according to claim 5, wherein a reinforcing insert (14) with spaced wall portions (28,29) is formed and is located in the mold cavity so as to locate the spaced wall portions (28,29) beyond respective ends of the skin tube segment (20), and the reinforcement member (22) is inserted through the tube segment (20) and fixedly connected at opposite ends thereof to the spaced wall portions (28,29).

7. A method for forming a shell (18) of fused and cured thermoplastic material by casting the thermoplastic material against a heated mold (40) to form a thin build-up of material on the heated mold (40), characterized by:
forming a tubular 360 degree surface (50) on the heated mold (40) through a segment (48) of the casting surface (45) thereof and heating all of the 360 degree surface while the thermoplastic material is cast thereon so as to form a shell (18) having a first generally planar segment and a second tubular segment (20) having opposite ends thereof formed in-situ with the planar segment.

8. A method according to claim 7, and further characterized by heating the 360 degree surface by directing part of the heat energy through the mold (40) per se and directing part of the heat energy through a heater (62) formed separately of the mold (40).

9. A method according to claim 7, and further characterized by locating a plug (54) in said mold (40) to form, with a partial tube surface (48) of said mold (40), a full 360 degree tube surface (50) and applying part of the heat to the tube surface (50) through the mold (40) and part of the heat to the tube surface (50) through the plug (54).

10. A method according to claim 7, and further characterized by supporting a heater (62) on the mold (40) and selectively moving the heater (62) into either a first position on the mold (40) to form a heated tube surface (50) onto which the thermoplastic material can be cast to form a full 360 degree tube skin segment (20) for a handle (30) or a second position raised from the mold (40) to form a demolding path to release the tube skin segment (20) from the mold (40).

11. Apparatus for molding a shell (18) of thermoplastic material having an integral tube segment (18) thereof, including a heated mold (40) with a recess (40a-40c) therein, characterized by:
means (46) forming a partially closed curved surface (48) in a casting surface (45) of the mold (40) for receiving thermoplastic material during a casting cycle;
plug means (54) for closing the opening in said partially closed curved surface (48), said plug means (54) having an inboard surface (55) thereon extending said partially closed curved surface (48) to form a full 360 degree tube surface (50) for receiving thermoplastic material, fusing the thermoplastic material and curing the thermoplastic material; and
heater means (62) in said plug means (54) for directing heat into part of the full 360 degree tube surface (50).

12. Apparatus according to claim 11, and further characterised by:
lift means (70) secured to said mold (40) for moving said plug means (54) into either a closure position in which said opening is closed to complete the tube surface (50) prior to casting thermoplastic material thereagainst or a demolding position wherein said tube surface (50) is opened to remove a formed tube skin segment (20) from the mold (40).

## Patentansprüche

1. Verkleidung (12), umfassend ein Hauptteil und einen Griff (30), der erste und zweite Teil des Hauptteils überbrückt, wobei ein inneres Verstärkungsteil (22) des Griffs (30), eine Schicht (16) aus flexiblem Schaum, die das Verstärkungsteil (22) umgibt, und eine Haut (18) aus geschmolzenem und gehärtetem thermoplastischem Material, die sowohl das Hauptteil als auch den Griff (30) bedeckt, vorliegt, wobei die Haut (18) erste und zweite Hautsegmente an den entsprechenden Enden das Griffs, und die integral aus ersten und zweiten Teilen gebildet werden, und ein Haut-Rohrsegment (20) umfaßt, das ohne Unterbrechung 360° um die Achse des Verstärkungsteils (22) herum durch im wesentlichen die volle Länge des Griffs (30) gebildet wird, wobei das Haut-Rohrsegment (20) kontinuierlich mit dem ersten Hautsegment an einem Ende des Griffs (30) gebildet wird, dadurch gekennzeichnet, daß das Haut-Rohrsegment (20) kontinuierlich mit beiden Hautsegmenten gebildet wird.

2. Verkleidung gemäß Anspruch 1, und weiterhin umfassend ein Einfügeteil (14) aus starrem Material, wobei die Schicht (16) aus flexiblem Schaum in situ an das Einfügeteil (14) gebunden wird, und die Haut (18) aus geschmolzenem und gehärtetem thermoplastischem Material an die Schicht (16) gebunden wird, um die äußere Oberfläche derselben zu bedecken.

3. Verkleidung gemäß Anspruch 2, worin das Einfügeteil (14) aus starrem Material getrennte Wandteile (28, 29) desselben hat, und das Verstärkungsteil (22) die getrennten Wandteile (28, 29) überbrückt, wobei Vorrichtungen (32, 34) vorliegen, um entgegengesetzte Enden des Verstärkungsteils (22) an die getrennten Wandteile (28, 29) zum Unterstützen des Haut-Rohrsegments (20) in Hinblick auf das Einfügeteil (14) fest abzusichern.

4. Verfahren zur Herstellung eines integralen Griffs (30) in einer Verkleidung (12), die eine Verbund-Kunststoffstruktur (12) darstellt, umfassend Vorformen einer Haut (18) aus geschmolzenem und gehärtetem thermoplastischem Material, damit integrale erste und zweite Hautsegmente und ein integrales Haut-Rohrsegment (20) darin vorliegen, wobei das Haut-Rohrsegment (20) kontinuierlich mit dem ersten Hautsegment gebildet wird, und Anordnen eines Verstärkungsteils (22) daselbst hindurch, vor dem Einführen von Schaum-Vorläufern in einen Raum, der zwischen der Haut (18) und dem Verstärkungsteil (22) in einem Formwerkzeug (90) gebildet wird, und Umsetzen der Vorläufer, um eine Weichschaum-Hinterfüllung (16) hinter der Haut (18) zu bilden, um so einen Griff zu bilden, der zwischen den ersten und zweiten Teilen des Hauptteils der Verkleidung (12) durch das Haut-Rohrsegment (20) überbrückt wird, das eine Bedeckung des Griffs (30) darstellt, und die ersten und zweiten Hautsegmente Bedeckungen der ersten und zweiten Teile darstellen, gekennzeichnet durch Vorformen der Haut (18), so daß das Haut-Rohrsegment (20) kontinuierlich mit beiden Hautsegmenten gebildet wird.

5. Verfahren gemäß Anspruch 4, dadurch gekennzeichnet, daß die Haut (18) in einem Form-Hohlraum des Werkzeugs (90) angeordet ist und eng gegen die Form-Hohlraum-Oberfläche anliegt, wobei das Verstärkungsteil (22) durch das Haut-Rohrsegment (20) eingeführt wird, und danach die Schaum-Vorläufer zwischen die Haut (18) und das Verstärkungsteil (22) geleitet werden, um zu verursachen, daß Schaummaterial auf es umhüllende Weise in das Verstärkungsteil (22) fließt, um ein Polster innerhalb des Haut-Rohrsegments (20) von vollständigen 360° zu bilden.

6. Verfahren gemäß Anspruch 5, worin ein verstärkendes Einfügeteil (14) mit getrennten Wandteilen (28, 29) gebildet wird, und in dem Form-Hohlraum so angeordnet wird, daß die getrennten Wandteile (28, 29) außerhalb entsprechender Enden des Haut-Rohrsegments (20) angeordnet werden, und das Verstärkungsteil (22) durch das Rohrsegment (22) eingeführt wird und fest an entgegengesetzten Enden desselben an die getrennten Wandteile (28, 29) gebunden wird.

7. Verfahren zur Bildung einer Schale (18) aus geschmolzenem und gehärtetem thermoplastischem Material durch Gießen des thermoplastischen Materials gegen ein erhitztes Werkzeug (40), um eine dünne Materialansammlung auf dem erhitzen Werkzeug (40) zu bilden, gekennzeichnet durch: Bilden einer ringförmigen 360°-Oberfläche (50) auf dem erhitzten Werkzeug (40) durch ein Segment (48) der Gießoberfläche (45) derselben und Erhitzen der gesamten 360°-Oberfläche während das thermoplastische Material darauf gegossen wird, um so eine Schale (18) zu bilden, die ein erstes allgemeines, ebenes Segment und ein zweites ringförmiges Segment (20) aufweist, das entgegengesetzte Enden aufweist, die in situ mit dem ebenen Segment gebildet werden.

8. Verfahren gemäß Anspruch 7, und weiterhin gekennzeichnet durch Erhitzen der 360°-Oberfläche mittels Hindurchführen eines Teils der Wärmeenergie durch das Werkzeug (40) an sich und Hindurchführen eines Teils der Wärmeenergie durch eine Heizvorrichtung (62), die getrennt von dem Werkzeug vorliegt.

9. Verfahren gemäß Anspruch 7, und weiterhin gekennzeichnet durch Anordnen eines Bolzens (54) in dem Werkzeug (40), um mit einer partiellen Rohroberfläche (48) des Werkzeugs (40) eine Rohroberfläche (50) von vollständigen 360° zu bilden, und Aufbringen eines Teils der Wärme auf die Rohroberfläche (50) durch das Werkzeug (40), und eines Teils der Wärme auf die Rohroberfläche (50) durch den Bolzen (54).

10. Verfahren gemäß Anspruch 7, und weiterhin gekennzeichnet durch Stützen einer Heizvorrichtung (62) auf dem Werkzeug (40) und selektives Bewegen der Heizvorrichtung (62) in entweder eine erste Stellung auf dem Werkzeug (40), um eine erwärmte Rohroberfläche (50) zu bilden, auf die das thermoplastische Material gegossen werden kann, um ein Rohr-Hautsegment (20) von vollständigen 360° für einen Griff (30) zu bilden, oder in eine zweite Stellung, die sich von dem Werkzeug (40) abhebt, um einen Entformungspfad zum Freisetzen des Rohr-Hautsegments (20) aus dem Werkzeug (40) zu bilden.

11. Vorrichtung zum Formen einer Schale (18) aus thermoplastischem Material, mit einem integralen Rohrsegment (18) desselben, einschließlich eines erwärmten Werkzeugs (40) mit einer Vertiefung (40a-40c) darin, gekennzeichnet durch:
Vorrichtung (46), die eine teilweise geschlossene, gebogene Oberfläche (48) in einer Gießoberfläche (45) des Werkzeugs (40) bildet, um thermoplastisches Material während eines Gießzyklus zu erhalten;
Bolzen-Vorrichtung (54) zum Schließen der Öffnung in der teilweise geschlossenen, gebogenen Oberfläche (48), wobei die Bolzen-Vorrichtung (54) eine nach innen gerichtete Oberfläche (55) darauf aufweist, die die teilweise geschlossene, gebogene Oberfläche (48) überragt, um eine Rohroberfläche (50) von vollständigen 360° zur Aufnahme thermoplastischen Materials zu bilden, Schmelzen des thermoplastischen Materials und Härten des thermoplastischen Materials, und
Heizvorrichtung (62) in der Bolzen-Vorrichtung (54) zum Leiten von Wärme in einen Teil der Rohroberfläche (50) von vollständigen 360°.

12. Vorrichtung gemäß Anspruch 11, und weiterhin gekennzeichnet durch:
Hebevorrichtung (70), die an das Werkzeug(40) gesichert ist, zum Bewegen der Bolzen-Vorrichtung (54) in entweder einer geschlossenen Stellung, in welcher die Öffnung verschlossen ist, um die Rohroberfläche (50) vor dem Gießen des thermoplastischen Materials gegen dieselbe zu vervollständigen, oder eine Entformungs-Stellung, worin die Rohroberfläche (50) geöffnet ist, um ein gebildetes Rohr-Hautsegment (20) aus dem Werkzeug (40) zu entfernen.

## Revendications

1. Un panneau (12) comprenant une partie principale et une poignée (30) réalisant un pont entre une première et une seconde portion de ladite partie principale, où il existe un élément de renfort intérieur (22) de la poignée (30), une couche (16) de mousse souple entourant l'élément de renfort (22), et une peau (18) de matière thermoplastique fondue et polymérisée recouvrant à la fois la partie principale et la poignée (30), ladite peau (18) comprenant de premier et second segments de peau aux extrémités respectives de ladite poignée et formés d'une seule pièce avec lesdites première et seconde portions et un segment tubulaire de peau (20) formé sans interruption sur 360 degrés autour de l'axe de l'élément de renfort (22) sensiblement sur toute la longueur de la poignée (30), ledit segment tubulaire de peau (20) étant formé de manière continue avec le premier segment de peau à une extrémité de ladite poignée (30), caractérisé en ce que ledit segment tubulaire de peau (20) est formé de manière continue avec les deux segments de peau.

2. Un panneau selon la revendication 1, et comprenant en outre une pièce d'insertion (14) en matière rigide, ladite couche (16) de mousse souple étant reliée in situ à ladite pièce d'insertion (14) et ladite peau (18) de matière thermoplastique fondue et polymérisée étant reliée à la couche (16) afin de recouvrir sa surface externe.

3. Un panneau selon la revendication 2, dans lequel la pièce d'insertion (14) en matière rigide présente des parties de paroi écartées (28, 29) et ledit élément de renfort (22) réalise un pont entre lesdites parties de paroi écartées (28, 29), des moyens (32, 34) existant pour relier fixement les extrémités opposées dudit élément de renfort (22) auxdites parties de paroi écartées (28, 29) afin de supporter le segment tubulaire de peau (20) par rapport à ladite pièce d'insertion (14).

4. Un procédé pour former une poignée d'une seule pièce (30) dans un panneau (12) constituant une structure plastique composite (12), comprenant le fait de préformer une peau (18) de matière thermoplastique fondue et polymérisée pour présenter de premier et second segments de peau d'une seule pièce et un segment tubulaire de peau d'une seule pièce (20) à l'intérieur, de sorte que le segment tubulaire de peau (20) est formé de manière continue avec le premier segment de peau, et placer un élément de renfort (22), à travers, avant de diriger des précurseurs de mousse dans un espace formé entre la peau (18) et l'élément de renfort (22) dans un moule de formage (90) et faire réagir les précurseurs pour former un support de mousse souple (16) derrière la peau (18), en formant ainsi une poignée (30) réalisant un pont entre de première et seconde portions d'une partie principale dudit panneau (12), ledit segment tubulaire de peau (20) constituant un recouvrement pour la poignée (30) et lesdits premier et second segments de peau constituant des recouvrements pour lesdites première et secondes portions, caractérisé par le fait de préformer ladite peau (18) de sorte que le segment tubulaire de peau (20) soit formé de manière continue avec les deux dits segments de peau.

5. Un procédé selon la revendication 4, caractérisé en ce que la peau (18) est placée dans une cavité de moulage dudit moule (90) et est ajustée contre la surface de la cavité de moulage, ledit élément de renfort (22) est inséré à travers le segment tubulaire de peau (20), et ensuite les précurseurs de mousse sont dirigés entre la peau (18) et l'élément de renfort (22) pour amener la matière en mousse à s'écouler en relation d'environnement avec l'élément de renfort (22) afin de former un coussin sur un total de 360 degrés à l'intérieur du segment tubulaire de peau (20).

6. Un procédé selon la revendication 5, dans lequel une pièce d'insertion de renfort (14) présentant des parties de paroi écartées (28, 29) est formée et est mise en place dans la cavité de moulage de manière à placer les parties de paroi écartées (28, 29) au-delà des extrémité respectives du segment tubulaire de peau (20), et dans lequel l'élément de renfort (22) est inséré à travers le segment tubulaire (20) et est relié fixement, au niveau de ses extrémités opposées, aux parties de paroi écartées (28, 29).

7. Un procédé pour former une coquille (18) en matière thermoplastique fondue et polymérisée en moulant la matière thermoplastique contre un moule chauffé (40) afin de former un mince accroissement de matière sur le moule chauffé (40), caractérisé par le fait de :
former une surface tubulaire (50) sur 360 degrés sur le moule chauffé (40) à travers un segment (48) de sa surface de moulage (45) et chauffer l'ensemble de la surface sur 360 degrés alors que la matière thermoplastique est moulée dessus de manière à former une coquille (18) présentant un premier segment généralement plan et un second segment tubulaire (20) présentant ses extrémités opposées formées in situ avec le segment plan.

8. Un procédé selon la revendication 7, et caractérisé en outre par le fait de chauffer la surface sur 360 degrés en dirigeant une partie de l'énergie thermique à travers le moule (40) lui-même et en dirigeant une partie de l'énergie thermique à travers un organe de chauffage (62) formé séparément du moule (40).

9. Un procédé selon la revendication 7, et caractérisé en outre par le fait de placer un bouchon (54) dans ledit moule (40) afin de former, avec une surface tubulaire partielle (48) dudit moule (40), une surface tubulaire complète (50) sur 360 degrés et appliquer une partie de la chaleur à la surface tubulaire (50) à travers le moule (40) et une partie de la chaleur à la surface tubulaire (50) à travers le bouchon (54).

10. Un procédé selon la revendication 7, et caractérisé en outre par le fait de supporter un organe de chauffage (62) sur le moule (40) et déplacer de manière sélective l'organe de chauffage (62) soit vers une première position sur le moule (40) afin de former une surface tubulaire chauffée (50) sur laquelle la matière thermoplastique peut être moulée pour former un segment de peau tubulaire complet (20) sur 360 degrés pour une poignée (30), soit vers une seconde position relevée par rapport au moule (40) afin de former un trajet de démoulage pour libérer le segment de peau tubulaire (20) par rapport au moule (40).

11. Appareil pour mouler une coquille (18) de matière thermoplastique présentant un segment tubulaire d'une seule pièce (18) comprenant un moule chauffé (40) avec un logement interne (40a-40c), caractérisé par :
des moyens (46) formant une surface courbe partiellement fermée (48) dans une surface de moulage (45) du moule (40) afin de recevoir de la matière thermoplastique pendant un cycle de moulage ;
des moyens formant bouchon (54) pour fermer l'ouverture de ladite surface courbe partiellement fermée (48), lesdits moyens formant bouchon (54) présentant une surface intérieure (55) prolongeant ladite surface courbe partiellement fermée (48) afin de former une surface tubulaire complète (50) sur 360 degrés pour recevoir la matière thermoplastique, faire fondre la matière thermoplastique et polymériser la matière thermoplastique ; et
des moyens de chauffage (62) dans lesdits moyens formant bouchon (54) afin de diriger de la chaleur dans une partie de la surface tubulaire complète (50) sur 360 degrés.

12. Appareil selon la revendication 11, et caractérisé en outre par :
des moyens de levage (70) fixés audit moule (40) pour déplacer lesdits moyens formant bouchon (54) soit vers une position de fermeture dans laquelle ladite ouverture est fermée pour compléter la surface tubulaire (50) avant de mouler la matière thermoplastique contre celle-ci, soit vers une position de démoulage dans laquelle ladite surface tubulaire (50) est ouverte pour enlever du moule (40), un segment de peau tubulaire formée (20).
